# EUROPEAN PATENT SPECIFICATION

(11) **EP 3 685 976 B1**
(45) Date of publication and mention of the grant of the patent: **06.10.2021**
(21) Application number: 20150759.7
(22) Date of filing: 08.01.2020
(51) Int. Cl.: B26D 7/06, B26D 1/06, B27B 5/065, B27B 31/00, B27B 31/04, B25J 11/00, B27M 1/08

(54) **IMPROVED PANEL WORKING MACHINE**
VERBESSERTE MASCHINE ZUR BEARBEITUNG VON PLATTEN
MACHINE AMEILLORÉE POUR LE TRAVAIL SUR LES PANNEAUX

(30) Priority: 25.01.2019 IT 201900001181
(43) Date of publication of application: 29.07.2020
(73) Proprietor: F.I.MA.L. S.r.l., 61032 Fano (PU) (IT)
(72) Inventor: MORSELLI, Stefano, 41012 CARPI (MO) (IT); PAOLONI, Valter, 61032 FANO (PU) (IT)
(74) Representative: Baldi, Claudio

(56) References cited:
- WO-A1-2007/029085
- IT-A1- UA20 164 532
- IT-B- 1 188 069

## Description

The present patent application for industrial invention relates to an improved panel working machine and to a panel working process with said machine.

In particular, the machine of the present invention has been devised to work panels, and namely to cut said panels.

The advantages of the present invention will be more evident after a short description of the prior art and of its drawbacks.

The purpose of the present invention is to improve a machine according to the prior art, such prior art machine upon which the preamble of claim 1 is based comprising:
- a loading station, wherein the panels are loaded;
- an unloading station, wherein the panels are unloaded;
- a working station;
- a working tool disposed in said working station; the tool is a cutting tool, preferably a cutting blade;
- supporting and moving means for said working tool; the supporting and moving means are suitable for moving said working tool along a working axis;
- a transporting station wherein the panel is transported; the loading station and the unloading station are disposed on one side of the working station, whereas the transporting station is disposed on the other side of the working station; the transporting station comprises a horizontal support table;
- a transporting unit disposed in said transporting station to move the panel in said transporting station, and to move the panel from the loading station to the unloading station.

Because of the provision of the loading station and of the unloading station on the same side of the working station, the loaded panels and the unloaded panels can be easily controlled by a single user disposed in the front part of the machine, upstream the working station and downstream the unloading station.

Moreover, because of such an arrangement, the panel can pass twice in the working station, performing at least two working operations before it is unloaded in the unloading station.

Because of the provision of the loading station and of the unloading station on the same side of the working station, the transporting unit transports the panel along a substantially U-shaped trajectory, wherein the loading station and the unloading station are disposed at the ends of said "U"-shape.

Preferably, the transporting unit consists in a rotary device that rotates the panel by 90° during the transportation of the panel from the loading station to the unloading station, in such a way that two working operations can be performed along perpendicular directions.

Therefore, in addition to transporting the panel from the loading station to the unloading station, with two passages in the working station, the transporting units also needs to rotate the panel.

In spite of its large popularity, the use of a similar machine for working one or more panels is impaired by some drawbacks.

In particular, the transporting unit uses mechanisms that are very complicated, cumbersome and composed of lever mechanisms that are difficult to design, make and synchronize, in addition to being very expensive.

Moreover, after transporting the panel from the loading station to the unloading station, the transporting unit must necessarily return to the loading station in order to grab another panel and move it along the transporting station.

In order to return to the loading station, the transporting unit must necessarily travel backwards along the U-shaped trajectory or along a different trajectory, such as for example the trajectory that joins the two ends of the U-shape.

Regardless of the fact that the transporting unit follows the U-shaped trajectory or a different trajectory, the machine takes some time to return to the loading station and grab a new panel, causing a so-called "downtime".

WO2007029085 discloses a panel saw machine, in particular for wooden panels or the like.

ITUA20164532 discloses a panel rotating device, in particular for the rotation of wooden panels in saw machines.

IT1188069B discloses a saw system of panel stacks according to different cutting patterns.

The purpose of the present invention is to overcome the drawbacks of the prior art by disclosing an improved panel working machine provided with an innovative transporting unit configured in such a way that the unloading travel and the loading travel coincide and are performed simultaneously.

Another purpose of the present invention is to disclose an improved panel working machine provided with an innovative transporting unit, which is rapid and compact.

These purposes are achieved according to the invention with the characteristics of the appended independent claim 1.

Advantageous embodiments appear from the dependent claims.

The improved panel working machine according to the invention is defined by claim 1.

For the sake of clarity, the description of the panel working machine according to the invention continues with reference to the appended drawings, which have a merely illustrative, not limiting value, wherein:
- Figs. 1 to 9 are top views of the machine of the invention in various operating steps during the working process of a panel;
- Fig. 10 is an axonometric view of the machine of the invention.

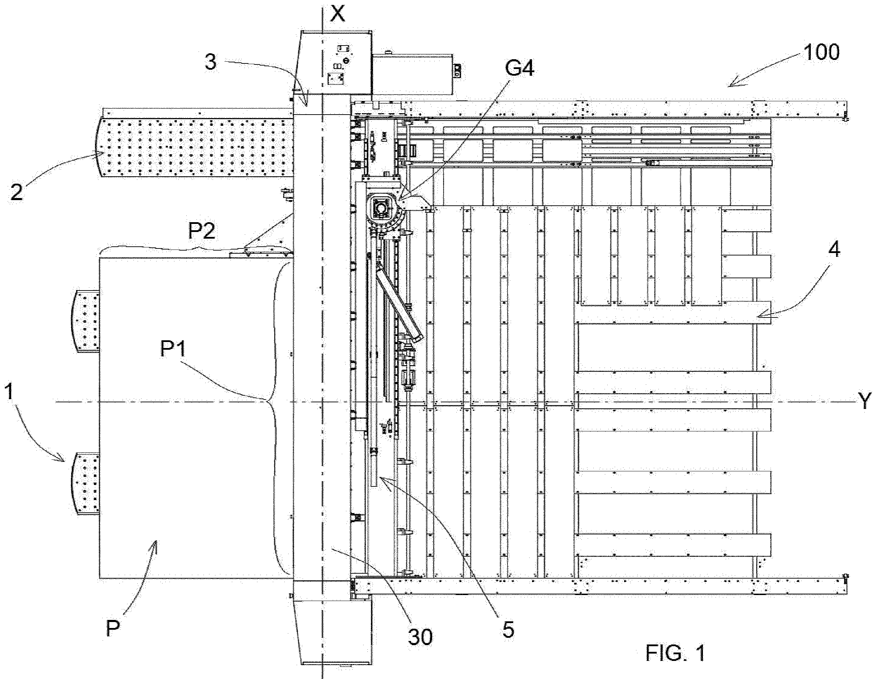

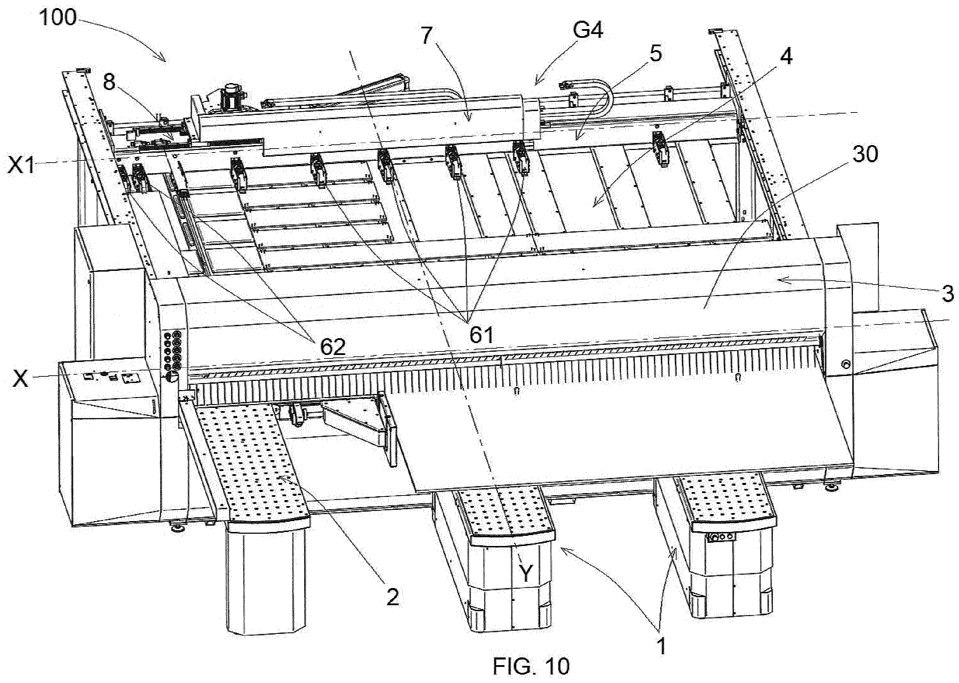

With reference to Figs. 1 to 10, a panel working machine according to the invention is disclosed, which is generally indicated with reference numeral (100).

The machine (100) comprises a loading station (1), whereon one or more panels (P) are disposed in order to be moved and worked by the machine (100).

The machine (100) also comprises an unloading station (2) whereon said panels (P) are unloaded after being worked by said machine (100).

The machine (100) comprises a working station (3) and a working tool. In particular, in the present invention, the working tool (not shown in the appended figures) is a cutting tool, preferably a cutting blade.

The machine (100) according to the invention is provided with supporting and moving means for the working tool, which move the working tool along a working axis (X).

Said working station (3) may also comprise a pressure piece, advantageously at least two pressure pieces, of which one upstream the working axis (X) and one downstream said working axis (X); said pressure pieces are of known type and are operated to stop the panel (P) during the working of the panel (P), and especially while cutting the panel (P).

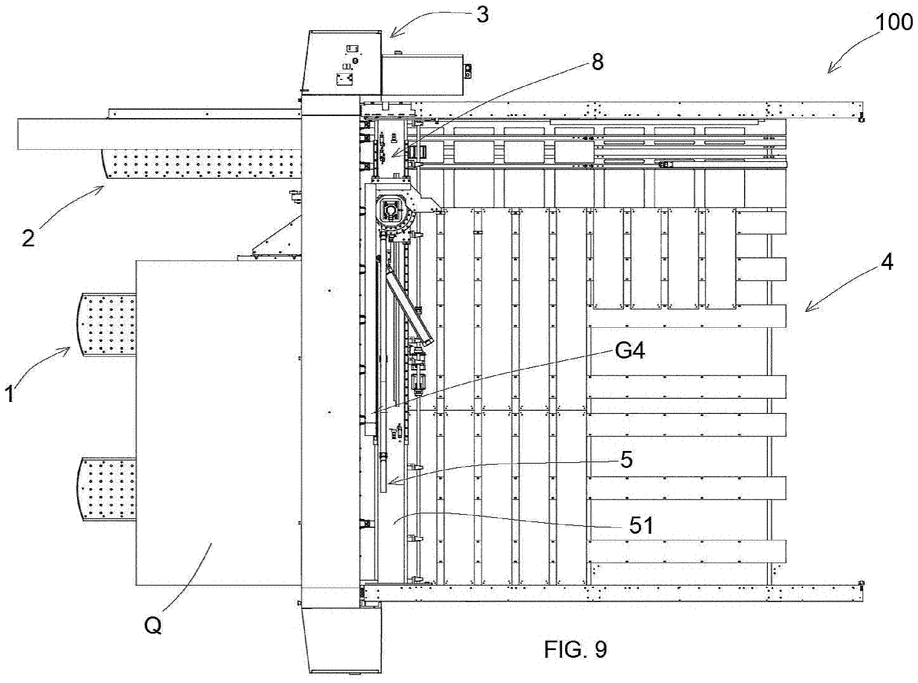

With reference to Figs.1 and 9, the working station (3) comprises a protection casing (30) that houses the supporting and moving means for the working tool, as well as the working tool.

Said moving and supporting means for said working tool consist in a slide whereon said working tool is mounted. The slide slidingly moves along a guide in such a way to slide along said working axis (X).

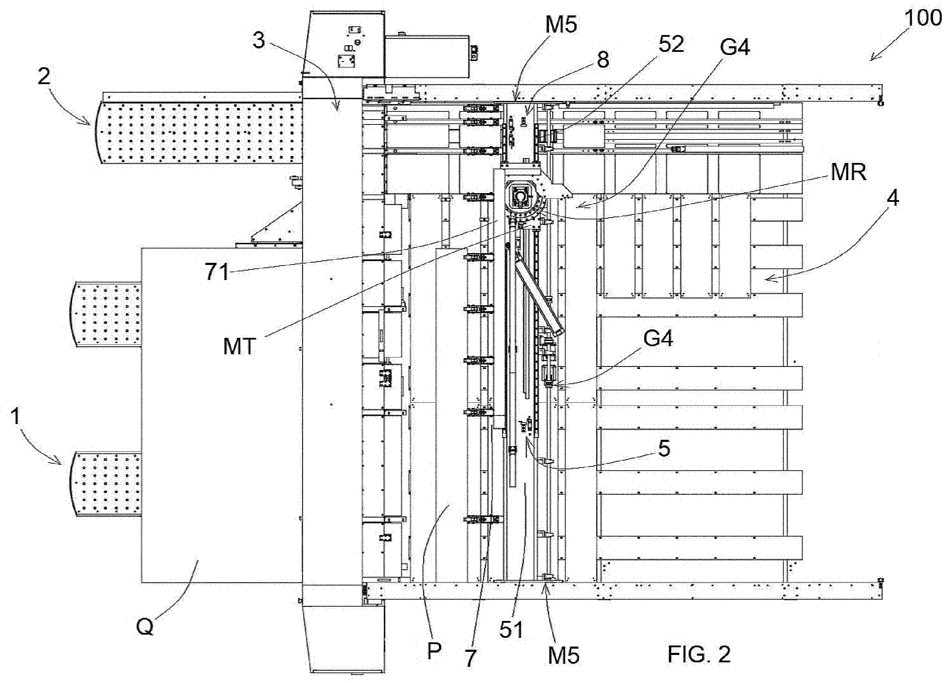

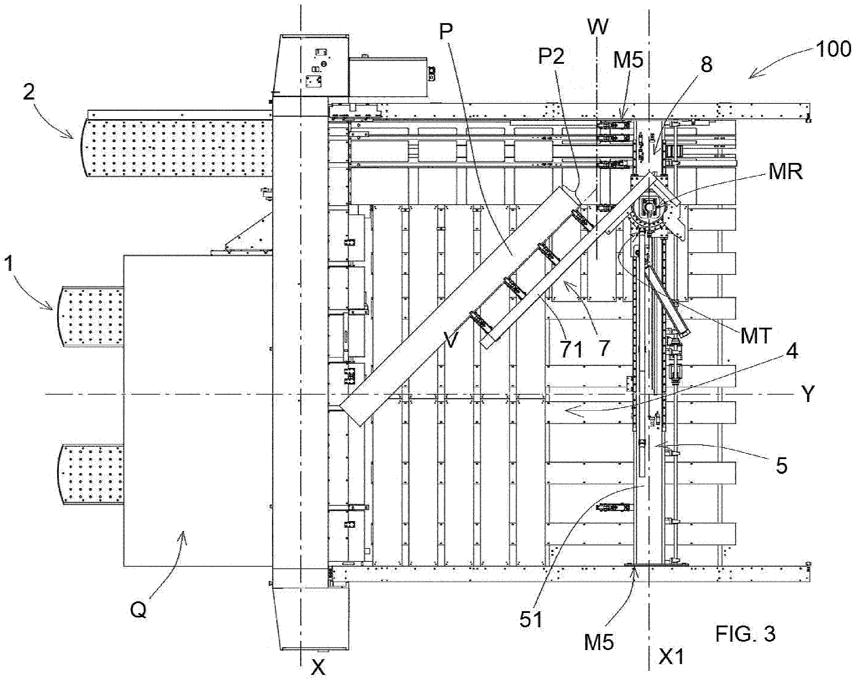

With reference to Figs. 2 and 3, the machine (100) comprises a transporting station (4) wherein the panel (P) to be worked is moved.

As shown in Figs. 1 to 9, the loading station (1) and the unloading station (2) are disposed on the same side of the working station (3), whereas the transporting station (4) is disposed on the other side of the working station (3).

The transporting station (4) comprises a transporting table, which is preferably disposed horizontally.

In order to move the panel (P) in the transporting station (4), the machine (100) is provided with a transporting unit (G4) disposed in said transporting station (4). The transporting unit (G4) that moves the panel (P) from the loading station (1) to the unloading station (2) comprises a first frame (5) that slides along an axis (Y) parallel to the transporting table of the transporting station (4) or lying on the transporting table.

In order to move said first frame (5), the transporting unit (G4) comprises moving means (M5) to move the first frame (5) between a proximal position, wherein the first frame (5) is proximal to the working station (3) and a distal position, wherein the first frame (5) is distal from said working station (3).

The transporting unit (G4) also comprises a second frame (7) that is supported by the first frame (5) and rotates around an orthogonal axis relative to the transporting table of the transporting station (4).

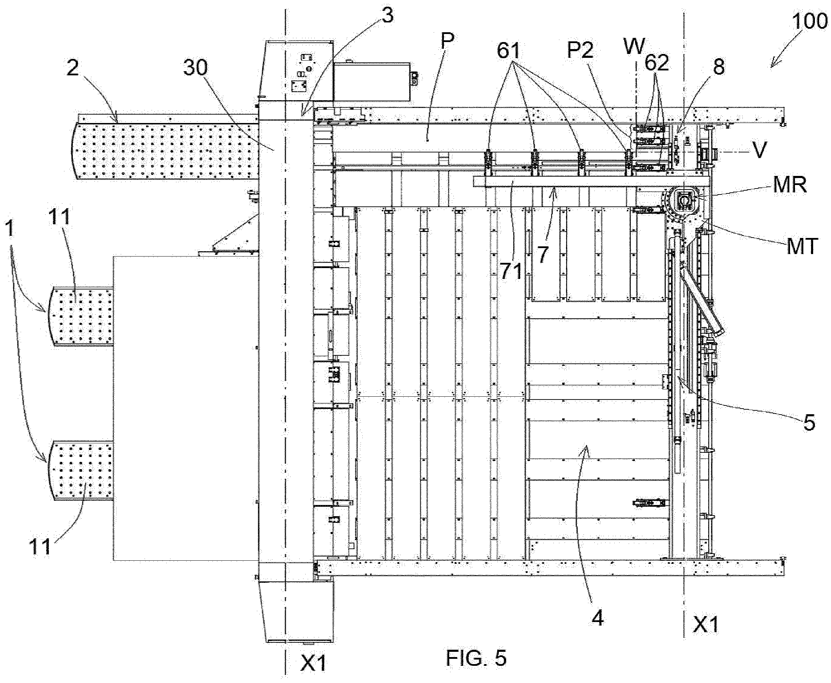

In order to move said second frame (7), the transporting unit (G4) comprises rotation means (MR) suitable for rotating and moving the second frame (7) between a first position and a second position. Preferably, the second frame (7) is rotated by 90° between the first position and the second position (as shown in Figs. 2 and 5).

The transporting unit (G4) comprises a third frame (8) that slides along an axis (Y) parallel to the support table of the transporting station (4) or lying on said support table. Moreover, the transporting unit (G4) comprises moving means (M5) to move said third frame (8) between a distal position relative to the working station (3) and a proximal position relative to the working station (3).

Preferably, the third frame (8) of the transporting unit (G4) is integral with the first frame (5). The moving means (M5) of the third frame (8) and the moving means (M5) of the first frame (5) comprise a motor to simultaneously move the first frame (5) and the third frame (8).

With reference to Fig. 2, the first frame (5) consists in a bar (51) comprising an end section (52) that coincides with said third frame (8).

The moving means (M5) of the first frame and of the third frame (5, 8) may consist, for example, in wheels, slides, trolleys or the like, which are slidingly mounted along guides obtained in the transporting station (4) and actuated by said motor.

It must be noted that, according to an alternative embodiment of the invention, the third frame (8) may be disengaged from the first frame (5). Evidently, such a solution is more expensive and less convenient compared to the solution shown in the appended figures. Preferably, the second frame (7) consists in an arm (71) hinged to the bar (51) by means of a rotary support; said rotation means (MR) comprise an actuator or the like suitable for rotating said arm (71).

The transporting unit (G4) also comprises first gripping means (61) supported by the second frame (7), and second gripping means (62) supported by the third frame (8). The first gripping means (61) and the second gripping means (62) are suitable for gripping and moving the panel (P) along the transporting station (4).

According to a preferred embodiment shown in the appended figures, the first gripping means (61) and the second gripping means (62) comprise a set of clamps.

The clamps of the first gripping means (61) are joined to the arm (71) of the second frame (7), whereas the clamps of the second gripping means (62) are joined to the end section (52) of the bar (51). Each clamp of the gripping means (61, 62) is provided with opposite elements that are moved by opening/closing means to move the two elements between an open position, wherein the opposite elements are distal, and a closing position, wherein the two elements are proximal, in such a way that each clamp of the gripping means (61, 62) can firmly grab the panel (P).

With reference to Figs. 3, 4 and 5, the transporting unit (G4) comprises translation means (MT) for the second frame (7) to move the second frame (7) along an axis (X1) parallel to the working axis (X).

Said translation means (MT) may consist in a trolley, a slide or the like, slidingly mounted along said second frame (7).Said trolley, slide or the like is moved by means of an electric motor.

The translation means (MT) of the panel (P) are provided in order to reduce the width of the transporting station (4) and of the entire machine (100).

Therefore, the second frame (7) is connected to the first frame (5) with possibility of rotating by means of the rotation means (MR) and sliding along the first frame (5) by means of the translation means (MT).

With reference to Fig. 3, the first gripping means (61) are aligned, generating a first gripping line (V); likewise, the second gripping means (62) are aligned, generating a second gripping line (W).

With reference to Fig. 5, the second gripping line (W) generated by the second gripping means (62) is parallel to the axis (X).

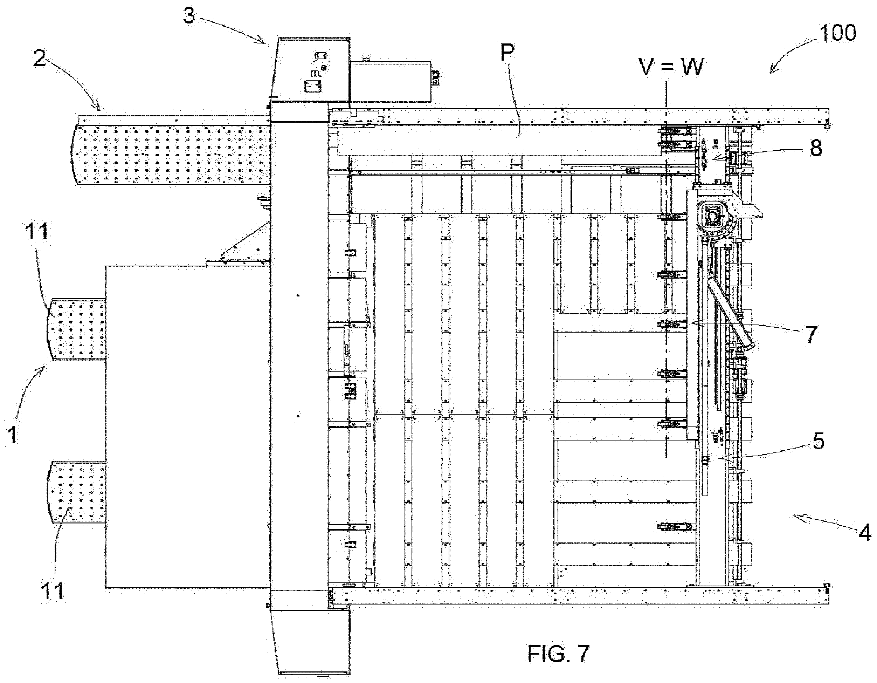

With reference to Figs. 5 and 7, the first gripping line (V) generated by the first gripping means (61) is parallel to the working axis (X) when the second frame (7) is in its first position (see Fig.7), and perpendicular to the working axis (X) when the second frame (7) is in its second position (see Fig.5).

In particular, with reference to Fig. 7, the first gripping line (V) lies on an axis that coincides with the axis where the second gripping line (W) lies when said second frame (7) is in its first position.

Advantageously, the loading station (1) may comprise one or more mobile tables (11) whereon a set of stacked panels (P) is disposed.

The mobile table or tables (11) are moved by means of moving means suitable for moving said mobile table(s) (11) along a vertical axis.

The provision of the mobile table or of the mobile tables (11) allows for positioning a panel (P) suitable for being worked by the machine (100) flush with the transporting table, in such a way that the panel can be inserted in the working station (3) by simply pushing the panel towards the working station (3).

Preferably, the transporting station (4) may comprise a set of support brushes that act as support while the panel (P) is moved along the transporting station (4).

Although in the present invention the gripping means (61, 62) consist in clamps, alternatively, the gripping means (61, 62) may consist in suction cups or any other devices that operate as gripping means.

With reference to Figs. 1 to 9, a process for using the machine (100) to work the panel (P) is described, wherein said working tool is a cutting tool.

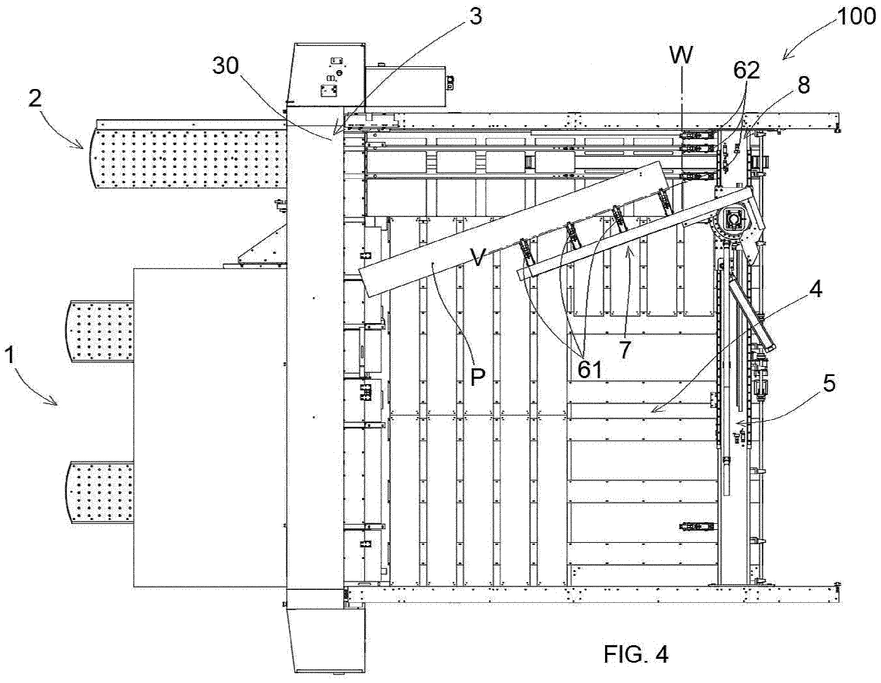

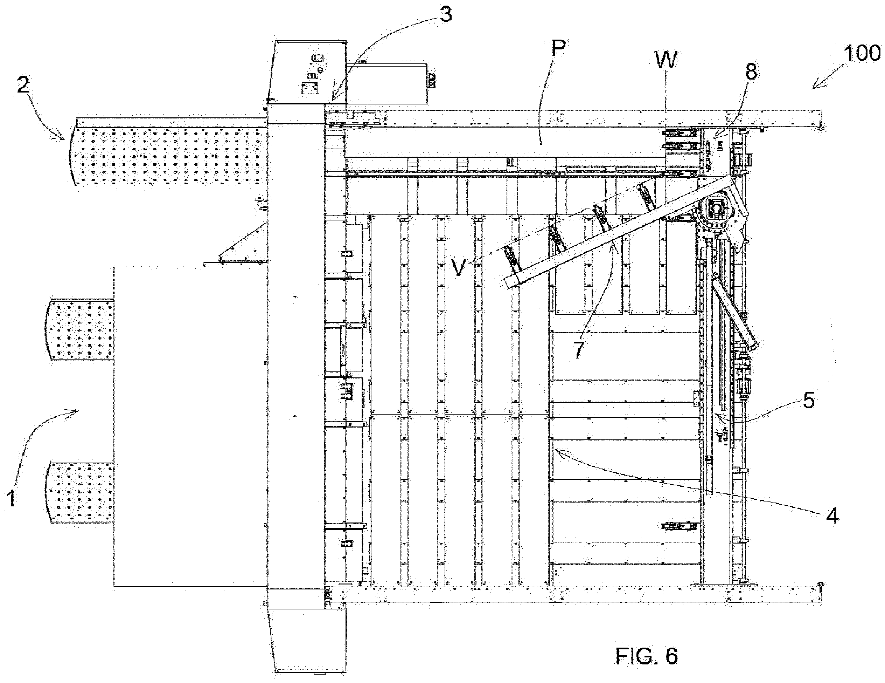

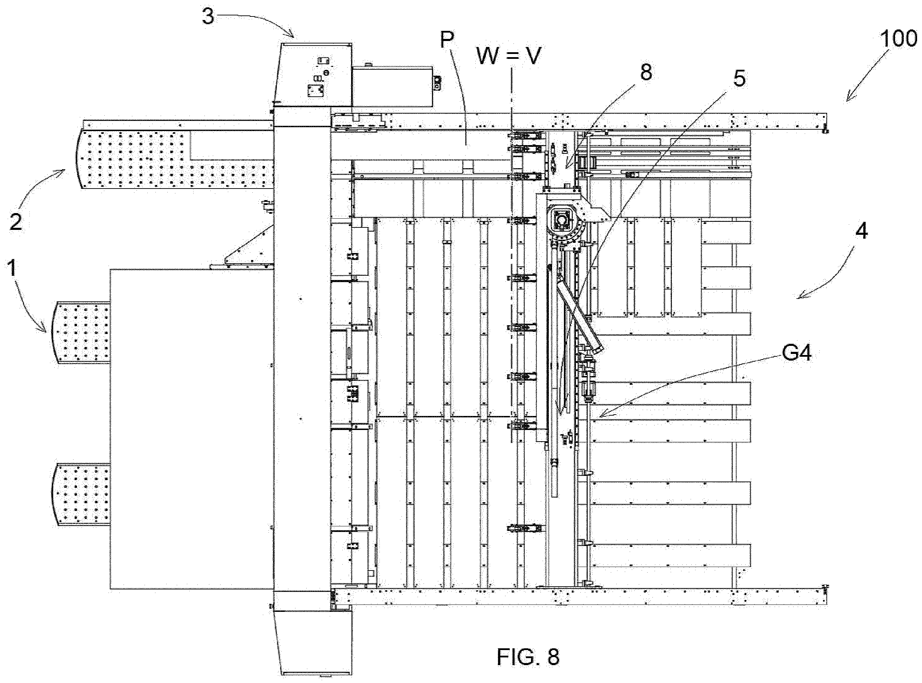

The process provides for the following steps:
a) disposing a panel (P) in the loading station (1); the panel (P) comprises a first side (P1) directed towards the working station (3), and a second side (P2) directed towards the unloading station (2), as shown in Fig. 1;
b) gripping the first side (P1) of said panel (P) with said first gripping means (61), as shown in Fig. 1;
c) actuating the moving means (M5) of the first frame (5) in such a way to move the first frame (5) away from the loading station (1), moving the panel (P) through said working station (3) and positioning said panel (P) between the loading station (1) and the transporting station (4);
d) stopping the moving means (M5) of the first frame (5);
e) actuating the supporting and moving means for said working tool, in such a way that said working tool can work (specifically cut) the panel (P) disposed in the loading station (1); in such a case, the working tool cuts the panel (P), reducing its size by eliminating a portion (Q) that remains in the loading station (1);
f) stopping the supporting and moving means of said working tool; it must be noted that, during the working step of the working tool, the panel (P) can be firmly stopped by actuating the aforementioned pressure piece and released when the working operation is completed;
g) actuating the moving means (M5) of the first frame (5) again, in such a way to move the first frame (5) away from said working station (3), moving the panel (P) with reduced size along the transporting station (4), as shown in Fig. 2;
h) actuating the rotation means (MR) of the second frame (7), moving said second frame (7) from its first position to its second position, as shown in Figs. 3 and 4;
i) gripping the second side (P2) of the panel with said second gripping means (62), as shown in Fig. 5;
j) releasing the panel (P) from the first gripping means (61);
k) actuating the rotation means (MR) of the second frame (7), moving said second frame (7) from its second position to its first position, as shown in Fig.6 and 7;
l) actuating the moving means (M5) of the third frame (8) in such a way to move said third frame (8) close to the working station (3), moving the panel (P) through the working station (3), as shown in Fig. 8;
m) stopping said moving means (M5) of the third frame (8);
n) actuating the supporting and moving means of said working tool, stopping the supporting and moving means when the working operation is completed; it must be noted that also in this step the panel can be stopped by means of a pressure piece;
o) actuating the moving means (M5) of the third frame (8) again, in such a way that the second gripping means (62) move the panel (P) to the unloading station (2);
p) releasing the panel (P) from the second gripping means (62) in the unloading station (2), as shown in Fig. 9.

As shown in Figs. 3, 4, and 5, the translation means (MT) can be also activated between step g) and step h) in such a way that the second frame (7) can translate along the first frame (5), in addition to rotating. Likewise, the translation means (MT) can be activated again between step k) and step I) in such a way to make the second frame (7) translate again along the first frame (5).

Although steps I), m) and n) are not shown in the appended figures, when the first frame (5) is moved closer to the working station (3) multiple working (cutting) operations can be cyclically performed, wherein the moving means (M5) of the first frame (5) are stopped, in such a way to partially position to panel (P) on the working station, between the transporting station (4) and the unloading station (2). After positioning the panel (P) with reduced size, the supporting and moving means of the working tool are activated to cut and divide the panel (P) with reduced size in a plurality of strips suitable for being positioned in the unloading station (2).

It must be noted, that, if the machine (100) is provided with two pressure pieces, i.e. one pressure piece upstream and one pressure piece downstream the working axis (X) during step f) of the aforementioned process, both pressure pieces are activated in such a way to firmly stop the panel (P) in the working station (3). When the working operation is completed, the pressure piece downstream the working axis (X) is deactivated, in such a way that the panel (P) with reduced size can be moved by the transporting unit (G4), whereas the pressure piece upstream the working axis (X) is maintained active in such a way to firmly position the portion (Q) in the loading station (1).

With reference to the aforementioned process, a clarification must be made with specific reference to step a), wherein the panel (P) is positioned in the loading station (1) and to step b), wherein the panel (P) is grabbed by the first gripping means (61) of the transporting unit (G4).

Different technical solutions and different processes can be adopted to actuate the process from step a) to step b).

According to the first solution, an operator is positioned between the loading station (1) and the working station (3) in order to manually push the panel (P) until the first side (P1) is disposed against first stop means, and the second side (P2) is disposed against second stop means; said first stop means may coincide with said first gripping means (61), whereas said second stop means may consist in a stop edge that stops the second side (P2) of the panel (P).

According to a different solution, the machine (100) and the process are automated by means of specific moving means or, alternatively, by using the first gripping means (61) that simply need to pass through the working station (3) in order to reach the loading station (1), grab the first side (P1) of the panel (P) and move the panel (P) to the working station (3).

With reference to steps a) and b), it must be noted that, in some instances, in the presence of defects, it may be necessary to trim the first side (P1) of the panel (P).

More precisely, in order to perform said trimming operation, before step b), said first side (P1) passes slightly beyond the working axis (X) of the working station (3), in such a way that the working tool can trim the panel (P), generating a first side (P1) without defects.

After performing the optional trimming operation, the process can continue as described above. In view of this, the initial panel (P) can be resized along two perpendicular directions.

When the first frame (5), the second frame (7) and the third frame (8) reach the working station and release the panel (P) completely, the first gripping means (61) grab the portion (Q) of panel (P) that was previously disposed in the loading station (1) after the first working operation.

The advantages of the present invention are manifest after the preceding description.

In particular, the configuration of the transporting unit (G4) with the first frame (5), the second frame (7) and the third frame (8) (integral with the first frame (5)) allows for working the panels consecutively and uninterruptedly.

More precisely, the unloading of the panel (P) with reduced size is performed simultaneously with the gripping of the portion (Q) of the panel (P) disposed in the loading station (1), thus obtaining a continuous process without the downtime of the prior art.

Moreover, the provision of the rotation means (MR) and of the translation means (MT) that allow the second frame (7) to roto-translate considerably reduces the length and the width of the machine (100) of the invention compared to a machine of the prior art.

According to an advantageous embodiment, the first frame (5) of the transporting unit (G4) comprises at least one fixed clamp (63); said first gripping means (61) are disposed between the second gripping means (62) and said at least one fixed clamp (63).

The purpose of said fixed clamp (63) is to cooperate with the first gripping means (61) in steps b) to f); more precisely, said fixed clamp (63) grabs the first side (P1) of the panel (P) with said first gripping means (61) to move the panel (P) from the stack of panels to the working station (3).

Successively, said fixed clamp (63) cooperates with the first gripping means (61) to hold the panel (P) in position while it is being cut by the working tool; when the cutting operation is completed, said fixed clamp (63) is opened, releasing the panel (P) that is held only by the first gripping means (61) that will transport the panel (P) to the successive station.

It must be noted that said fixed clamp (63) holds the first side (P1) of the panel (P) when said panel (P) is to be moved from the stack of panels; during this step, the panel (P) has a large size and a considerable weight. Said fixed clamp (63) holds the first side of the panel (P) during the cutting step in order to firmly stop the panel (P).

As soon as the panel (P) is cut, said fixed clamp (63) is opened, and the panel (P) is held only by the first gripping means (61) that transport a panel (P) with lower size and weight.

Numerous variations and modifications, which are within the reach of an expert of the field, can be made to the present embodiment of the invention, falling in any case within the scope of the invention as disclosed by the appended claims.

## Claims

1. Machine (100) for working at least one panel (P); said machine (100) comprising:
- a loading station (1);
- an unloading station (2);
- a working station (3);
- a working tool disposed in said working station (3);
- supporting and moving means for said working tool; said supporting and moving means being suitable for moving said working tool along a working axis (X);
- a transporting station (4) wherein the panel is transported; said loading station (1) and said unloading station (2) are disposed on one side of the working station (3), whereas said transporting station (4) is disposed on the other side of the working station (3); said transporting station (4) comprises a transporting table;
- a transporting unit (G4) disposed in said transporting station (4) to move said panel (P) in said transporting station (4);
machine (100) **characterized in that** said transporting unit (G4) comprises:
- a first frame (5);
- moving means (M5) for said first frame (5), which move said first frame (5) from a proximal position relative to the working station (3) to a distal position relative to said working station (3);
- a second frame (7) that is supported by the first frame (5); said second frame (7) being suitable for rotating around an orthogonal axis relative to the transporting table;
- rotation means (MR) for said second frame (7) to move said second frame (7) between a first position and a second position;
- a third frame (8);
- moving means (M5) for said third frame (8), which move said third frame (8) from a distal position relative to the working station (3) to a proximal position relative to said working station (3);
- first gripping means (61) supported by the second frame (7);
- second gripping means (62) supported by the third frame (8).

2. The machine (100) of claim 1, wherein said third frame (8) is integral with said first frame (5); said moving means (M5) of the first frame (5) and said moving means (M5) of the third frame (8) comprise a motor that simultaneously moves the first frame and the third frame (5, 8).

3. The machine (100) of claim 1 or 2, wherein the rotation means (MR) for said second frame (7) move said second frame (7) between a first position and a second position, wherein said second frame (7) is rotated by 90° relative to said first position.

4. The machine (100) of any one of the preceding claims, comprising translation means (MT) for said second frame (7), which move said second frame (7) along an axis (X1) parallel to the working axis (X).

5. The machine (100) of claim 4, wherein said first gripping means (61) are mounted on the second frame (7) in aligned position, generating a first gripping line (V); said second gripping means (62) are mounted on the first frame (5) in aligned position, generating a second gripping line (W); said first gripping line (V) is orthogonal to said second gripping line (W) when the second frame (7) is in its second position.

6. The machine (100) of claim 5, wherein said first gripping line (V) is parallel to the working axis (X) when the second frame (7) is in its first position; said second gripping line (W) is parallel to the working axis (X).

7. The machine (100) of any one of the preceding claims, wherein said working tool comprises a cutting tool suitable for cutting the panel (P).

8. The machine (100) of any one of the preceding claims, wherein said loading station (1) comprises at least one mobile table (11) whereon at least one panel (P) is to be disposed; said machine (100) comprising moving means suitable for moving said at least one mobile table (11) along a vertical axis.

9. Process for using the machine (100) according to any one of the preceding claims; said process providing for the following steps:
a) disposing a panel (P) in the loading station (1); said panel (P) comprising a first side (P1) directed towards the working station (3), and a second side (P2) directed towards the unloading station (2);
b) gripping the first side (P1) of said panel (P) with said first gripping means (61);
c) actuating the moving means (M5) of the first frame (5) in such a way to move the first frame (5) away from said loading station (1), moving the panel (P) through said working station (3);
d) stopping the moving means (M5) of the first frame (5);
e) actuating the supporting and moving means for said working tool;
f) stopping the supporting and moving means for said working tool;
g) actuating the moving means (M5) of the first frame (5) again, in such a way to move the first frame (5) away from said working station (3);
h) actuating the rotation means (MR) for the second frame (7), moving said second frame (7) from its first position to its second position;
i) gripping the second side (P2) of the panel with said second gripping means (62);
j) releasing the panel (P) from the first gripping means (61);
k) actuating the rotation means (MR) of the second frame (7), moving said second frame (7) from its second position to its first position;
l) actuating the moving means (M5) of the third frame (8) in such a way to move said third frame (8) close to the working station (3), and moving the panel (P) through the working station (3);
m) stopping said moving means (M5) of the third frame (8);
n) actuating the supporting and moving means for said working tool and stopping the supporting and moving means when the working operation is completed;
o) actuating the moving means (M5) of the third frame (8) again, in such a way that the second gripping means (62) move the panel (P) to the unloading station (2);
p) releasing the panel (P) from the second gripping means (62) in the unloading station (2).

10. The process of claim 9, wherein the steps I), m), n) are repeated cyclically.

11. The process of claim 9 or 10, wherein, between step g) and step h), the second frame (7) is translated along an axis (X1) parallel to the working axis (X).

## Patentansprüche

1. Maschine (100) zur Bearbeitung von mindestens einer Platte (P); wobei die Maschine (100) Folgendes umfasst:
- eine Ladestation (1);
- eine Entladestation (2);
- eine Bearbeitungsstation (3);
- ein Bearbeitungswerkzeug, das in der Bearbeitungsstation (3) angeordnet ist;
- Trag- und Bewegungsmittels für die Bearbeitungswerkzeuge; wobei die Trag- und Bewegungsmittel dazu geeignet sind, die Bearbeitungswerkzeuge entlang einer Bearbeitungsachse (X) zu bewegen;
- eine Transportstation (4) in die die Platte transportiert wird; wobei die Ladestation (1) und die Entladestation (2) auf einer Seite der Bearbeitungsstation (3) angeordnet sind, während die Transportstation (4) auf der anderen Seite der Bearbeitungsstation (3) angeordnet ist; wobei die Transportstation (4) einen Transporttisch umfasst;
- eine Transporteinheit (G4), die in der Transportstation (4) angeordnet ist, um die Platte (P) ins Innere der Transportstation (4) zu bewegen;
wobei die Maschine (100) **dadurch gekennzeichnet ist, dass** die Transporteinheit (G4) Folgendes umfasst:
- einen ersten Rahmen (5);
- Bewegungsmittel (M5) für den ersten Rahmen (5), die den ersten Rahmen (5) aus einer proximalen Position relativ zu der Bearbeitungsstation (3) in eine distale Position relativ zu der Bearbeitungsstation (3) bewegen;
- einen zweiten Rahmen (7), der von dem ersten Rahmen (5) getragen wird; wobei der zweite Rahmen (7) dazu geeignet ist, sich um eine Achse rechtwinklig zum Transporttisch zu drehen;
- Drehmittel (MR) für den zweiten Rahmen (7), um den zweiten Rahmen (7) zwischen einer ersten Position und einer zweiten Position zu bewegen;
- einen dritten Rahmen (8);
- Bewegungsmittel (M5) für den dritten Rahmen (8), die den dritten Rahmen (8) aus einer distalen Position relativ zu der Bearbeitungsstation (3) in eine proximale Position relativ zu der Bearbeitungsstation (3) bewegen;
- erste Greifmittel (61), die von dem zweiten Rahmen (7) getragen werden;
- zweite Greifmittel (62), die von dem dritten Rahmen (8) getragen werden.

2. Maschine (100) nach Anspruch 1, wobei der dritte Rahmen (8) einstückig mit dem ersten Rahmen (5) ist; wobei die Bewegungsmittel (M5) des ersten Rahmens (5) und die Bewegungsmittel (M5) des dritten Rahmens (8) einen Motor umfassen, der den ersten Rahmen und den dritten Rahmen (5, 8) gleichzeitig bewegt.

3. Maschine (100) nach Anspruch 1 oder 2, wobei die Drehmittel (MR) für den zweiten Rahmen (7) den zweiten Rahmen (7) zwischen einer ersten Position und einer zweiten Position bewegen, wobei der zweite Rahmen (7) um 90° relativ zu der ersten Position gedreht ist.

4. Maschine (100) nach einem der vorstehenden Ansprüche, umfassend Verschiebungsmittel (MT) für den zweiten Rahmen (7), die den zweiten Rahmen (7) entlang einer Achse (X1) parallel zu der Bearbeitungsachse (X) bewegen.

5. Maschine (100) nach Anspruch 4, wobei die ersten Greifmittel (61) auf dem zweiten Rahmen (7) in ausgerichteter Position montiert sind und eine erste Greiflinie (V) erzeugen; wobei die zweiten Greifmittel (62) auf dem ersten Rahmen (5) in ausgerichteter Position montiert sind und eine zweite Greiflinie (W) erzeugen; wobei die erste Greiflinie (V) rechtwinklig zu der zweiten Greiflinie (W) ist, wenn der zweite Rahmen (7) in seiner zweiten Position ist.

6. Maschine (100) nach Anspruch 5, wobei die erste Greiflinie (V) parallel zu der Bearbeitungsachse (X) ist, wenn der zweite Rahmen (7) in seiner ersten Position ist; wobei die zweite Greiflinie (W) parallel zu der Bearbeitungsachse (X) ist.

7. Maschine (100) nach einem der vorstehenden Ansprüche, wobei das Bearbeitungswerkzeug ein Schneidewerkzeug umfasst, das zum Schneiden der Platte (P) bestimmt ist.

8. Maschine (100) nach einem der vorstehenden Ansprüche, wobei die Ladestation (1) mindestens einen beweglichen Tisch (11) umfasst, auf dem mindestens eine Platte (P) anzuordnen ist; wobei die Maschine (100) Bewegungsmittel umfasst, die dazu geeignet sind, mindestens einen beweglichen Tisch (11) entlang einer vertikalen Achse zu bewegen.

9. Verfahren zur Verwendung der Maschine (100) nach einem der vorstehenden Ansprüche; wobei das Verfahren folgende Schritte vorsieht:
a) Anordnen einer Platte (P) in der Ladestation (1); wobei die Platte (P) eine erste Seite (P1) umfasst, die zu der Bearbeitungsstation (3) gerichtet ist, und eine zweite Seite (P2) die zu der Entladestation (2) gerichtet ist;
b) Greifen der ersten Seite (P1) der Platte (P) mit den ersten Greifmitteln (61);
c) Betätigen der Bewegungsmittel (M5) des ersten Rahmens (5), so dass der erste Rahmen (5) weg von der Ladestation (1) bewegt wird und die Platte (P) durch die Bearbeitungsstation (3) bewegt wird;
d) Stoppen der Bewegungsmittel (M5) des ersten Rahmens (5);
e) Betätigen der Trag- und Bewegungsmittel für das Bearbeitungswerkzeug;
f) Stoppen der Trag- und Bewegungsmittel für das Bearbeitungswerkzeug;
g) erneutes Betätigen der Bewegungsmittel (M5) des ersten Rahmens (5), so dass der erste Rahmen (5) weg von der Bearbeitungsstation (3) bewegt wird;
h) Betätigen der Drehmittel (MR) für den zweiten Rahmen (7), indem der zweite Rahmen (7) aus seiner ersten Position in seine zweite Position bewegt wird;
i) Greifen der zweiten Seite (P2) der Platte mit den zweiten Greifmitteln (62);
j) Loslassen der Platte (P) aus den ersten Greifmitteln (61);
k) Betätigen der Drehmittel (MR) des zweiten Rahmens (7), indem der zweite Rahmen (7) aus seiner zweiten Position in seine erste Position bewegt wird;
l) Betätigen der Bewegungsmittel (M5) des dritten Rahmens (8), so dass der dritte Rahmen (8) an die Bearbeitungsstation (3) heranbewegt wird und die Platte (P) durch die Bearbeitungsstation (3) bewegt wird;
m) Stoppen der Bewegungsmittel (M5) des dritten Rahmens (8);
n) Betätigen der Trag- und Bewegungsmittel für das Bearbeitungswerkzeug und Stoppen der Trag- und Bewegungsmittel, wenn die Bearbeitung beendet ist;
o) erneutes Betätigen der Bewegungsmittel (M5) des dritten Rahmens (8), so dass die zweiten Greifmittel (62) die Platte (P) zu der Entladestation (2) bewegen;
p) Loslassen der Platte (P) aus den zweiten Greifmitteln (62) in der Entladestation (2).

10. Verfahren nach Anspruch 9, wobei die Schritte I), m), n) zyklisch wiederholt werden.

11. Verfahren nach Anspruch 9 oder 10, wobei zwischen Schritt g) und Schritt h) der zweite Rahmen (7) entlang einer Achse (X1) parallel zu der Bearbeitungsachse (X) verschoben wird.

## Revendications

1. Machine (100) pour l'usinage d'au moins un panneau (P) ; ladite machine (100) comprenant :
- un poste d'empilage (1);
- un poste de déchargement (2);
- un poste d'usinage (3);
- un outil d'usinage qui se trouve dans ledit poste d'usinage (3) ;
- des moyens de support et de translation pour ledit outil d'usinage ; lesdits moyens de support et translation mettant en mouvement ledit outil d'usinage le long d'un axe d'usinage (X) ;
- un poste de transport (4) à l'intérieur duquel le panneau transite ; ledit poste d'empilage (1) et ledit poste de déchargement (2) étant les deux situés d'un côté du poste d'usinage (3), tandis que ledit poste de transport (4) est disposé de l'autre côté du poste d'usinage (3) ; ledit poste de transport (4) comprenant un plan de transport ;
- un groupe de transport (G4), situé dans ledit poste de transport (4), qui déplace ledit panneau (P) à l'intérieur du dit poste de transport (4) ;
machine (100) **caractérisée en ce que** ledit groupe de transport (G4) comprend :
- un premier châssis (5);
- des moyens de déplacement (M5) pour ledit premier châssis (5), qui déplacent ledit premier châssis (5) depuis une position rapprochée au poste d'usinage (3) à une position éloignée du dit poste d'usinage (3) ;
- un deuxième châssis (7) qui est soutenu par le premier châssis (5) ; ledit deuxième châssis (7) pivotant autour d'un axe orthogonal au plan de transport ;
- des moyens de rotation (MR) pour ledit deuxième châssis (7) qui déplacent ledit deuxième châssis (7) entre une première position et une seconde position ;
- un troisième châssis (8);
- des moyens de déplacement (M5) pour ledit troisième châssis (8), qui déplacent ledit troisième châssis (8) depuis une position éloignée du poste d'usinage (3) à une position rapprochée du dit poste d'usinage (3) ;
- des premiers moyens de prise (61) soutenus par le deuxième châssis (7) ;
- des seconds moyens de prise (62) soutenus par le troisième châssis (8).

2. Machine (100) selon la revendication 1, où ledit troisième châssis (8) est solidaire au dit premier châssis (5) ; lesdits moyens de déplacement (M5) du premier châssis (5) et lesdits moyens de déplacement (M5) du troisième châssis (8) comprennent un moteur qui déplace simultanément le premier et le troisième châssis (5, 8).

3. Machine (100) selon la revendication 1 ou 2, où lesdits moyens de rotation (MR) pour ledit deuxième châssis (7) déplacent ledit deuxième châssis (7) entre une première position et une seconde position, où ledit deuxième châssis (7) est pivoté de 90° par rapport à ladite première position.

4. Machine (100) selon l'une quelconque des revendications précédentes, comprenant des moyens de translation (MT) pour ledit deuxième châssis (7) qui déplacent ledit deuxième châssis (7) selon un axe (X1) parallèle à l'axe d'usinage (X).

5. Machine (100) selon la revendication 4, où lesdits premiers moyens de prise (61) sont montés sur le deuxième châssis (7) alignés entre eux, en générant une première ligne de prise (V) ; lesdits seconds moyens de prise (62) étant montés sur le premier châssis (5) alignés entre eux, en générant une seconde ligne de prise (W) ; ladite première ligne de prise (V) étant orthogonale à ladite seconde ligne de prise (W), lorsque le deuxième châssis (7) se trouve sur sa seconde position-

6. Machine (100) selon la revendication 5, où ladite première ligne de prise (V) est parallèle à l'axe d'usinage (X) lorsque le deuxième châssis (7) se trouve sur sa première position ; ladite seconde ligne de prise (W) étant parallèle à l'axe d'usinage (X).

7. Machine (100) selon l'une quelconque des revendications précédentes, où ledit outil d'usinage comprend un outil de coupe destiné à couper le panneau (P).

8. Machine (100) selon l'une quelconque des revendications précédentes, où ledit poste d'empilage (1) comprend au moins un plan mobile (11) sur lequel est destiné à être posé au moins un panneau (P) ; ladite machine (100) comprenant des moyens de déplacement apte à déplacer ledit au moins un plan mobile (11) le long d'un axe vertical.

9. Procédure pour l'utilisation de la machine (100) selon l'une quelconque des revendications précédentes ; ladite procédure prévoyant les phases suivantes :
a) disposer un panneau (P) dans le poste d'empilage (1) ; ledit panneau (P) comprenant un premier côté (P1) orienté vers le poste d'usinage (3) et un second côté (P2) orienté vers le poste de déchargement (2) ;
b) prélever avec lesdits premiers moyens de prise (61) le premier côté (P1) du dit panneau (P) ;
c) actionner les moyens de déplacement (M5) du premier châssis (5) de manière à éloigner le premier châssis (5) par rapport au dit poste d'empilage (1), en entrainant le panneau (P) à travers ledit poste d'usinage (3) ;
d) bloquer les moyens de déplacement (M5) du premier châssis (5) ;
e) actionner les moyens de support et de déplacement pour ledit outil d'usinage ;
f) bloquer les moyens de support et de déplacement pour ledit outil d'usinage ;
g) actionner de nouveau les moyens de déplacement (M5) du premier châssis (5) de façon à éloigner le premier châssis (5) par rapport au dit poste d'usinage (3) ;
h) actionner les moyens de rotation (MR) pour le deuxième châssis (7) en déplaçant ledit deuxième châssis (7) depuis sa première position à sa seconde position ;
i) prélever, avec lesdits seconds moyens de prise (62), le panneau en correspondance de son second côté (P2) ;
j) relâcher le panneau (P) de la part des premiers moyens de prise (61);
k) actionner les moyens de rotation (MR) du deuxième châssis (7) en déplaçant ledit deuxième châssis (7) depuis sa seconde position sur sa première position ;
l) actionner les moyens de déplacement (M5) du troisième châssis (8) en rapprochant ledit troisième châssis (8) au poste d'usinage (3) et en déplaçant le panneau (P) à travers le poste d'usinage (3) ;
m) arrêter lesdits moyens de déplacement (M5) du troisième châssis (8) ;
n) actionner les moyens de support et de déplacement pour ledit outil d'usinage pour ensuite les bloquer lorsque l'usinage est terminé ;
o) actionner de nouveau les moyens de déplacement (M5) du troisième châssis (8) de façon à ce que les seconds moyens de prise (62) puissent déplacer le panneau (P) dans le poste de déchargement (2) ;
p) relâcher le panneau (P) de la part des seconds moyens de prise (62) dans le poste de déchargement (2).

10. Procédure selon la revendication 9, où les phases l), m), n) sont répétées cycliquement.

11. Procédure selon la revendication 9 ou 10, où entre la phase g) et la phase h) il est prévu de faire déplacer le deuxième châssis (7) le long d'un axe (X1) parallèle à l'axe d'usinage (X).
